# EUROPEAN PATENT SPECIFICATION

(11) **EP 4 581 559 B1**
(45) Date of publication and mention of the grant of the patent: **30.09.2026**
(21) Application number: 23801958.2
(22) Date of filing: 05.10.2023
(51) Int. Cl.: G06T 3/40, G06T 3/04, H04N 23/69, G06V 10/25, G06V 10/46, H04N 23/63, H04N 23/611, H04N 23/661

(54) **IMAGE SALIENCY BASED SMART FRAMING**
INTELLIGENTES RAHMENWERK AUF BILDEINMALIGKEITSBASIS
CADRAGE INTELLIGENT BASÉ SUR LE RELIEF D'IMAGE

(30) Priority: 05.10.2022 US 202263378444 P
(43) Date of publication of application: 09.07.2025
(73) Proprietor: GOOGLE LLC, Mountain View CA 94043 (US)
(72) Inventor: CANG, Ruijin, Mountain View, CA 94043 (US); HONG, Wei, Mountain View, CA 94043 (US); HICKSON, Steven, David, Mountain View, CA 94043 (US)
(74) Representative: Colonna, Matthew Oliver
(86) International application number: PCT/US2023/034539
(87) International publication number: WO 2024/076676

(56) References cited:
- EP-A1- 3 934 237
- CN-A- 111 353 382
- US-A1- 2016 117 798
- SENJIAN AN ET AL: "Efficient algorithms for subwindow search in object detection and localization", 2009 IEEE CONFERENCE ON COMPUTER VISION AND PATTERN RECOGNITION, 1 June 2009 (2009-06-01), pages 264 - 271, XP093140254, ISSN: 1063-6919, ISBN: 978-1-4244-3992-8, Retrieved from the Internet <URL:https://espace.curtin.edu.au/bitstream/handle/20.500.11937/15717/133817_133817.pdf> [retrieved on 20240312], DOI: 10.1109/CVPR.2009.5206822

## Description

### CROSS-REFERENCE TO RELATED APPLICATIONS

This application claims priority to U.S. Provisional Patent Application No. 63/378,444, filed October 5, 2022.

### BACKGROUND

Many modem computing devices, including mobile phones, personal computers, and tablets, include image capturing devices. Some image capturing devices are configured with telephoto capabilities. EP 3934237 A1 discloses methods to provide for automatic cropping of images, given requested target dimensions and/or an aspect ratio. US 2016/0117798 A1 discloses image zooming, wherein zoomed croppings of an image are scored, and at least one zoomed cropping is chosen based on the scores.

### SUMMARY

According to the present invention, there is provided a method according to claim 1, a device according to claim 10, a non-transitory computer readable medium according to claim 14, and a computer program product according to claim 15. In an embodiment, a method includes receiving an image captured by an image capturing device. The method also includes determining a saliency bounding box based on a saliency metric determined for pixels of the image. The method further includes determining one or more face bounding boxes surrounding one or more faces identified within the image. The method additionally includes determining a zoom bounding box based on the saliency bounding box and the one or more face bounding boxes. The method also includes determining a zoom ratio based on the determined zoom bounding box. The method further includes providing a zoomed image for display based on the determined zoom ratio.

In another embodiment, a system includes a processor and a non-transitory computer-readable medium having stored thereon instructions that, when executed by the processor, cause the processor to perform operations. The operations include receiving an image captured by an image capturing device. The operations also include determining a saliency bounding box based on a saliency metric determined for pixels of the image. The operations further include determining one or more face bounding boxes surrounding one or more faces identified within the image. The operations additionally include determining a zoom bounding box based on the saliency bounding box and the one or more face bounding boxes. The operations also include determining a zoom ratio based on the determined zoom bounding box. The operations further include providing a zoomed image for display based on the determined zoom ratio.

In another embodiment, an image capturing device includes a camera and a control system. The control system is configured to receive an image captured by an image capturing device. The control system is also configured to determine a saliency bounding box based on a saliency metric determined for pixels of the image. The control system is further configured to determine one or more face bounding boxes surrounding one or more faces identified within the image. The control system is additionally configured to determine a zoom bounding box based on the saliency bounding box and the one or more face bounding boxes. The control system is also configured to determine a zoom ratio based on the determined zoom bounding box. The control system is further configured to provide a zoomed image for display based on the determined zoom ratio.

In a further embodiment, a system is provided that includes means for receiving an image captured by an image capturing device. The system also includes means for determining a saliency bounding box based on a saliency metric determined for pixels of the image. The system further includes means for determining one or more face bounding boxes surrounding one or more faces identified within the image. The system additionally includes means for determining a zoom bounding box based on the saliency bounding box and the one or more face bounding boxes. The system also includes means for determining a zoom ratio based on the determined zoom bounding box. The system further includes means for providing a zoomed image for display based on the determined zoom ratio.

The foregoing summary is illustrative only and is not intended to be in any way limiting. In addition to the illustrative aspects, embodiments, and features described above, further aspects, embodiments, and features will become apparent by reference to the figures and the following detailed description and the accompanying drawings.

### BRIEF DESCRIPTION OF THE DRAWINGS

Figure 1 illustrates an example computing device, in accordance with example embodiments.
Figure 2 is a simplified block diagram showing some of the components of an example computing system.
Figure 3 is a diagram illustrating a training phase and an inference phase of one or more trained machine learning models in accordance with example embodiments.
Figure 4a is an image, in accordance with example embodiments.
Figure 4b is a heatmap, in accordance with example embodiments.
Figure 5 illustrates a heatmap with a bounding box, in accordance with example embodiments.
Figure 6 illustrates an image, in accordance with example embodiments.
Figure 7 illustrates an image on a phone with a bounding box, in accordance with example embodiments.
Figure 8 illustrates an image on a phone, in accordance with example embodiments.
Figure 9 illustrates an image and heatmaps with bounding boxes, in accordance with example embodiments.
Figure 10 illustrates an image and heatmaps with bounding boxes, in accordance with example embodiments.
Figure 11 illustrates an image and heatmaps with bounding boxes, in accordance with example embodiments.
Figure 12 illustrates a heatmap with bounding boxes, in accordance with example embodiments.
Figure 13 is a flowchart of a method, in accordance with example embodiments.

### DETAILED DESCRIPTION

Example methods, devices, and systems are described herein. It should be understood that the words "example" and "exemplary" are used herein to mean "serving as an example, instance, or illustration." Any embodiment or feature described herein as being an "example" or "exemplary" is not necessarily to be construed as preferred or advantageous over other embodiments or features unless indicated as such. Other embodiments can be utilized, and other changes can be made, without departing from the scope of the claims.

Thus, the example embodiments described herein are not meant to be limiting. It will be readily understood that the aspects of the present disclosure, as generally described herein, and illustrated in the figures, can be arranged, substituted, combined, separated, and designed in a wide variety of different configurations.

Throughout this description, the articles "a" or "an" are used to introduce elements of the example embodiments. Any reference to "a" or "an" refers to "at least one," and any reference to "the" refers to "the at least one," unless otherwise specified, or unless the context clearly dictates otherwise. The intent of using the conjunction "or" within a described list of at least two terms is to indicate any of the listed terms or any combination of the listed terms.

The use of ordinal numbers such as "first," "second," "third" and so on is to distinguish respective elements rather than to denote a particular order of those elements. For the purpose of this description, the terms "multiple" and "a plurality of" refer to "two or more" or "more than one."

Further, unless context suggests otherwise, the features illustrated in each of the figures may be used in combination with one another. Thus, the figures should be generally viewed as component aspects of one or more overall embodiments, with the understanding that not all illustrated features are necessary for each embodiment. In the figures, similar symbols typically identify similar components, unless context dictates otherwise. Further, unless otherwise noted, figures are not drawn to scale and are used for illustrative purposes only. Moreover, the figures are representational only and not all components are shown. For example, additional structural or restraining components might not be shown.

Additionally, any enumeration of elements, blocks, or steps in this specification or the claims is for purposes of clarity. Thus, such enumeration should not be interpreted to require or imply that these elements, blocks, or steps adhere to a particular arrangement or are carried out in a particular order.

### I. Overview

To capture an image using an image capturing device, including digital cameras, smartphones, laptops, and so on, a user can power on the device and initiate an image sensor (e.g., camera) boot-up sequence. A user may initiate the boot-up sequence by selecting an application or simply turning on the device. The boot-up sequence typically involves an iterative optical and software-settings-adjustment process (e.g., automatic focus, automatic exposure, automatic white balance). After the booting sequence is complete, the image capturing device can then capture a quality image. Seldom, however, does the captured image contain an optimally zoomed presentation of the photographic scene. For example, it may be preferable that the captured image contain a zoomed-in representation of the photographic scene, focusing on an object of interest.

Current techniques to adjust the zoom of an image sensor involve the users providing manual input (e.g., adjusting a knob) or performing a gesture (e.g., a pinch gesture, double-tap the screen). Oftentimes, manually adjusting the zoom requires time and effort by the user. Ideally, an image capturing device could automatically achieve a suitable zoom for a photographic scene.

Described herein are techniques for image capturing devices to automatically zoom to areas of an image that are associated with classification(s) of interest in a photographic scene, e.g., one or more faces. In some examples, through utilization of a machine-learned technique, the image capturing device may detect a visual saliency region within an image, generate a bounding box enclosing the visual saliency region, and calculate an appropriate zoom ratio. In so doing, the image capturing device can implement the calculated zoom ratio to automatically achieve a suitable zoom for the photographic scene. The image capturing device may also use a machine learning model to determine areas where faces or other classifications of interest are predicted to be present, and the image capturing device may use the determined areas in combination with the visual saliency region to determine an area to zoom.

In particular, the image capturing device may selectively determine which of the areas of interest as defined by bounding boxes to combine with the visual saliency region as defined by a saliency bounding box, which may improve the functioning of the camera and/or of a camera application on the image capturing device. The image capturing device may join overlapping bounding boxes (e.g., a saliency bounding box and one or more bounding boxes determined from areas with classifications of interest) to determine a zoom bounding box, which may help facilitate determining a more suitable zoomed image that includes areas that a user may find important while excluding other areas. Appropriately zoomed images may also facilitate automatic usage of an appropriate camera when the image capturing device has multiple cameras, reduction of manual user input for zooming and/or cropping images, quicker and more accurate automatic zooming and/or cropping functions, and higher quality images.

### II. Example Systems and Methods

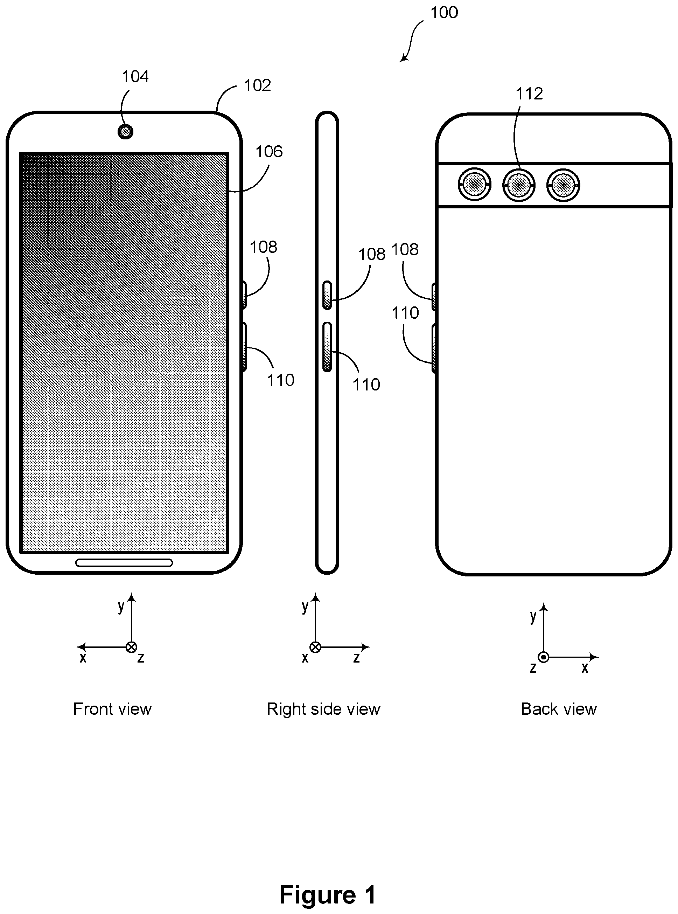

Figure 1 illustrates an example computing device 100. Computing device 100 is shown in the form factor of a mobile phone. However, computing device 100 may be alternatively implemented as a laptop computer, a tablet computer, and/or a wearable computing device, among other possibilities. Computing device 100 may include various elements, such as body 102, display 106, and buttons 108 and 110. Computing device 100 may further include one or more cameras, such as front-facing camera 104 and at least one rear-facing camera 112. In examples with multiple rear-facing cameras such as illustrated in Figure 1, each of the rear-facing cameras may have a different field of view. For example, the rear facing cameras may include a wide angle camera, a main camera, and a telephoto camera. The wide angle camera may capture a larger portion of the environment compared to the main camera and the telephoto camera, and the telephoto camera may capture more detailed images of a smaller portion of the environment compared to the main camera and the wide angle camera.

Front-facing camera 104 may be positioned on a side of body 102 typically facing a user while in operation (e.g., on the same side as display 106). Rear-facing camera 112 may be positioned on a side of body 102 opposite front-facing camera 104. Referring to the cameras as front and rear facing is arbitrary, and computing device 100 may include multiple cameras positioned on various sides of body 102.

Display 106 could represent a cathode ray tube (CRT) display, a light emitting diode (LED) display, a liquid crystal (LCD) display, a plasma display, an organic light emitting diode (OLED) display, or any other type of display known in the art. In some examples, display 106 may display a digital representation of the current image being captured by front-facing camera 104 and/or rear-facing camera 112, an image that could be captured by one or more of these cameras, an image that was recently captured by one or more of these cameras, and/or a modified version of one or more of these images. Thus, display 106 may serve as a viewfinder for the cameras. Display 106 may also support touchscreen functions that may be able to adjust the settings and/or configuration of one or more aspects of computing device 100.

Front-facing camera 104 may include an image sensor and associated optical elements such as lenses. Front-facing camera 104 may offer zoom capabilities or could have a fixed focal length. In other examples, interchangeable lenses could be used with front-facing camera 104. Front-facing camera 104 may have a variable mechanical aperture and a mechanical and/or electronic shutter. Front-facing camera 104 also could be configured to capture still images, video images, or both. Further, front-facing camera 104 could represent, for example, a monoscopic, stereoscopic, or multiscopic camera. Rear-facing camera 112 may be similarly or differently arranged. Additionally, one or more of front-facing camera 104 and/or rear-facing camera 112 may be an array of one or more cameras.

One or more of front-facing camera 104 and/or rear-facing camera 112 may include or be associated with an illumination component that provides a light field to illuminate a target object. For instance, an illumination component could provide flash or constant illumination of the target object. An illumination component could also be configured to provide a light field that includes one or more of structured light, polarized light, and light with specific spectral content. Other types of light fields known and used to recover three-dimensional (3D) models from an object are possible within the context of the examples herein.

Computing device 100 may also include an ambient light sensor that may continuously or from time to time determine the ambient brightness of a scene that cameras 104 and/or 112 can capture. In some implementations, the ambient light sensor can be used to adjust the display brightness of display 106. Additionally, the ambient light sensor may be used to determine an exposure length of one or more of cameras 104 or 112, or to help in this determination.

Computing device 100 could be configured to use display 106 and front-facing camera 104 and/or rear-facing camera 112 to capture images of a target object. The captured images could be a plurality of still images or a video stream. The image capture could be triggered by activating button 108, pressing a softkey on display 106, or by some other mechanism. Depending upon the implementation, the images could be captured automatically at a specific time interval, for example, upon pressing button 108, upon appropriate lighting conditions of the target object, upon moving computing device 100 a predetermined distance, or according to a predetermined capture schedule.

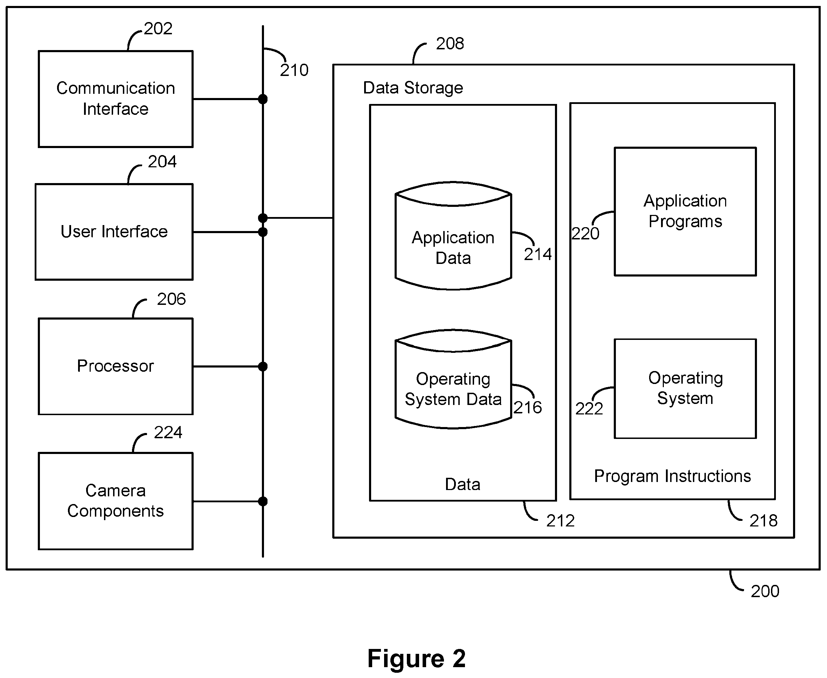

Figure 2 is a simplified block diagram showing some of the components of an example computing system 200. By way of example and without limitation, computing system 200 may be a cellular mobile telephone (e.g., a smartphone), a computer (such as a desktop, notebook, tablet, server, or handheld computer), a home automation component, a digital video recorder (DVR), a digital television, a remote control, a wearable computing device, a gaming console, a robotic device, a vehicle, or some other type of device. Computing system 200 may represent, for example, aspects of computing device 100.

As shown in Figure 2, computing system 200 may include communication interface 202, user interface 204, processor 206, data storage 208, and camera components 224, all of which may be communicatively linked together by a system bus, network, or other connection mechanism 210. Computing system 200 may be equipped with at least some image capture and/or image processing capabilities. It should be understood that computing system 200 may represent a physical image processing system, a particular physical hardware platform on which an image sensing and/or processing application operates in software, or other combinations of hardware and software that are configured to carry out image capture and/or processing functions.

Communication interface 202 may allow computing system 200 to communicate, using analog or digital modulation, with other devices, access networks, and/or transport networks. Thus, communication interface 202 may facilitate circuit-switched and/or packet-switched communication, such as plain old telephone service (POTS) communication and/or Internet protocol (IP) or other packetized communication. For instance, communication interface 202 may include a chipset and antenna arranged for wireless communication with a radio access network or an access point. Also, communication interface 202 may take the form of or include a wireline interface, such as an Ethernet, Universal Serial Bus (USB), or High-Definition Multimedia Interface (HDMI) port, among other possibilities. Communication interface 202 may also take the form of or include a wireless interface, such as a Wi-Fi, BLUETOOTH^{®}, global positioning system (GPS), or wide-area wireless interface (e.g., WiMAX or 3GPP Long-Term Evolution (LTE)), among other possibilities. However, other forms of physical layer interfaces and other types of standard or proprietary communication protocols may be used over communication interface 202. Furthermore, communication interface 202 may comprise multiple physical communication interfaces (e.g., a Wi-Fi interface, a BLUETOOTH^{®} interface, and a wide-area wireless interface).

User interface 204 may function to allow computing system 200 to interact with a human or non-human user, such as to receive input from a user and to provide output to the user. Thus, user interface 204 may include input components such as a keypad, keyboard, touch-sensitive panel, computer mouse, trackball, joystick, microphone, and so on. User interface 204 may also include one or more output components such as a display screen, which, for example, may be combined with a touch-sensitive panel. The display screen may be based on CRT, LCD, LED, and/or OLED technologies, or other technologies now known or later developed. User interface 204 may also be configured to generate audible output(s), via a speaker, speaker jack, audio output port, audio output device, earphones, and/or other similar devices. User interface 204 may also be configured to receive and/or capture audible utterance(s), noise(s), and/or signal(s) by way of a microphone and/or other similar devices.

In some examples, user interface 204 may include a display that serves as a viewfinder for still camera and/or video camera functions supported by computing system 200. Additionally, user interface 204 may include one or more buttons, switches, knobs, and/or dials that facilitate the configuration and focusing of a camera function and the capturing of images. It may be possible that some or all of these buttons, switches, knobs, and/or dials are implemented by way of a touch-sensitive panel.

Processor 206 may comprise one or more general purpose processors - e.g., microprocessors - and/or one or more special purpose processors - e.g., digital signal processors (DSPs), graphics processing units (GPUs), floating point units (FPUs), network processors, or application-specific integrated circuits (ASICs). In some instances, special purpose processors may be capable of image processing, image alignment, and merging images, among other possibilities. Data storage 208 may include one or more volatile and/or non-volatile storage components, such as magnetic, optical, flash, or organic storage, and may be integrated in whole or in part with processor 206. Data storage 208 may include removable and/or non-removable components.

Processor 206 may be capable of executing program instructions 218 (e.g., compiled or non-compiled program logic and/or machine code) stored in data storage 208 to carry out the various functions described herein. Therefore, data storage 208 may include a non-transitory computer-readable medium, having stored thereon program instructions that, upon execution by computing system 200, cause computing system 200 to carry out any of the methods, processes, or operations disclosed in this specification and/or the accompanying drawings. The execution of program instructions 218 by processor 206 may result in processor 206 using data 212.

By way of example, program instructions 218 may include an operating system 222 (e.g., an operating system kernel, device driver(s), and/or other modules) and one or more application programs 220 (e.g., camera functions, address book, email, web browsing, social networking, audio-to-text functions, text translation functions, and/or gaming applications) installed on computing system 200. Similarly, data 212 may include operating system data 216 and application data 214. Operating system data 216 may be accessible primarily to operating system 222, and application data 214 may be accessible primarily to one or more of application programs 220. Application data 214 may be arranged in a file system that is visible to or hidden from a user of computing system 200.

Application programs 220 may communicate with operating system 222 through one or more application programming interfaces (APIs). These APIs may facilitate, for instance, application programs 220 reading and/or writing application data 214, transmitting or receiving information via communication interface 202, receiving and/or displaying information on user interface 204, and so on.

In some cases, application programs 220 may be referred to as "apps" for short. Additionally, application programs 220 may be downloadable to computing system 200 through one or more online application stores or application markets. However, application programs can also be installed on computing system 200 in other ways, such as via a web browser or through a physical interface (e.g., a USB port) on computing system 200.

Camera components 224 may include, but are not limited to, an aperture, shutter, recording surface (e.g., photographic film and/or an image sensor), lens, shutter button, infrared projectors, and/or visible-light projectors. Camera components 224 may include components configured for capturing of images in the visible-light spectrum (e.g., electromagnetic radiation having a wavelength of 380 - 700 nanometers) and/or components configured for capturing of images in the infrared light spectrum (e.g., electromagnetic radiation having a wavelength of 701 nanometers - 1 millimeter), among other possibilities. Camera components 224 may be controlled at least in part by software executed by processor 206.

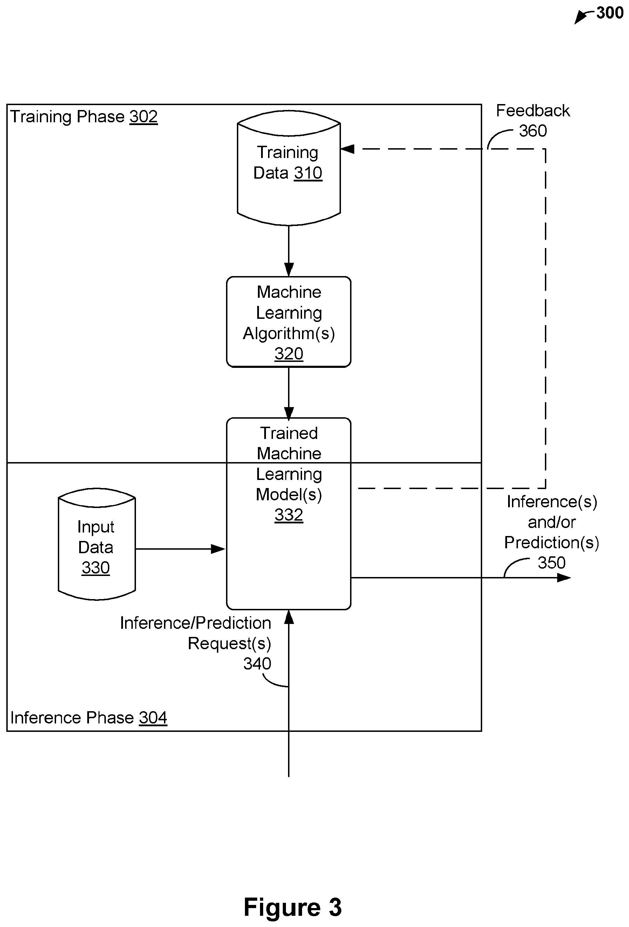

Figure 3 shows diagram 300 illustrating a training phase 302 and an inference phase 304 of trained machine learning model(s) 332, in accordance with example embodiments. Some machine learning techniques involve training one or more machine learning algorithms on an input set of training data to recognize patterns in the training data and provide output inferences and/or predictions about (patterns in the) training data. The resulting trained machine learning algorithm can be termed as a trained machine learning model. For example, Figure 3 shows training phase 302 where one or more machine learning algorithms 320 are being trained on training data 310 to become trained machine learning model 332. Producing trained machine learning model(s) 332 during training phase 302 may involve determining one or more hyperparameters, such as one or more stride values for one or more layers of a machine learning model as described herein. Then, during inference phase 304, trained machine learning model 332 can receive input data 330 and one or more inference/prediction requests 340 (perhaps as part of input data 330) and responsively provide as an output one or more inferences and/or predictions 350. The one or more inferences and/or predictions 350 may be based in part on one or more learned hyperparameters, such as one or more learned stride values for one or more layers of a machine learning model as described herein

As such, trained machine learning model(s) 332 can include one or more models of one or more machine learning algorithms 320. Machine learning algorithm(s) 320 may include, but are not limited to: an artificial neural network (e.g., a herein-described convolutional neural networks, a recurrent neural network, a Bayesian network, a hidden Markov model, a Markov decision process, a logistic regression function, a support vector machine, a suitable statistical machine learning algorithm, and/or a heuristic machine learning system). Machine learning algorithm(s) 120 may be supervised or unsupervised, and may implement any suitable combination of online and offline learning.

In some examples, machine learning algorithm(s) 320 and/or trained machine learning model(s) 332 can be accelerated using on-device coprocessors, such as graphic processing units (GPUs), tensor processing units (TPUs), digital signal processors (DSPs), and/or application specific integrated circuits (ASICs). Such on-device coprocessors can be used to speed up machine learning algorithm(s) 320 and/or trained machine learning model(s) 332. In some examples, trained machine learning model(s) 332 can be trained, reside and execute to provide inferences on a particular computing device, and/or otherwise can make inferences for the particular computing device.

During training phase 302, machine learning algorithm(s) 320 can be trained by providing at least training data 310 as training input using unsupervised, supervised, semi-supervised, and/or reinforcement learning techniques. Unsupervised learning involves providing a portion (or all) of training data 310 to machine learning algorithm(s) 320 and machine learning algorithm(s) 320 determining one or more output inferences based on the provided portion (or all) of training data 310. Supervised learning involves providing a portion of training data 310 to machine learning algorithm(s) 320, with machine learning algorithm(s) 320 determining one or more output inferences based on the provided portion of training data 310, and the output inference(s) are either accepted or corrected based on correct results associated with training data 310. In some examples, supervised learning of machine learning algorithm(s) 320 can be governed by a set of rules and/or a set of labels for the training input, and the set of rules and/or set of labels may be used to correct inferences of machine learning algorithm(s) 320.

Semi-supervised learning involves having correct results for part, but not all, of training data 310. During semi-supervised learning, supervised learning is used for a portion of training data 310 having correct results, and unsupervised learning is used for a portion of training data 310 not having correct results.

Reinforcement learning involves machine learning algorithm(s) 320 receiving a reward signal regarding a prior inference, where the reward signal can be a numerical value. During reinforcement learning, machine learning algorithm(s) 320 can output an inference and receive a reward signal in response, where machine learning algorithm(s) 320 are configured to try to maximize the numerical value of the reward signal. In some examples, reinforcement learning also utilizes a value function that provides a numerical value representing an expected total of the numerical values provided by the reward signal over time. In some examples, machine learning algorithm(s) 320 and/or trained machine learning model(s) 332 can be trained using other machine learning techniques, including but not limited to, incremental learning and curriculum learning.

In some examples, machine learning algorithm(s) 320 and/or trained machine learning model(s) 332 can use transfer learning techniques. For example, transfer learning techniques can involve trained machine learning model(s) 332 being pre-trained on one set of data and additionally trained using training data 310. More particularly, machine learning algorithm(s) 320 can be pre-trained on data from one or more computing devices and a resulting trained machine learning model provided to computing device CD1, where CD1 is intended to execute the trained machine learning model during inference phase 304. Then, during training phase 302, the pre-trained machine learning model can be additionally trained using training data 310. This further training of the machine learning algorithm(s) 320 and/or the pre-trained machine learning model using training data 310 of CD1's data can be performed using either supervised or unsupervised learning. Once machine learning algorithm(s) 320 and/or the pre-trained machine learning model has been trained on at least training data 310, training phase 302 can be completed. The trained resulting machine learning model can be utilized as at least one of trained machine learning model(s) 332.

In particular, once training phase 302 has been completed, trained machine learning model(s) 332 can be provided to a computing device, if not already on the computing device. Inference phase 304 can begin after trained machine learning model(s) 332 are provided to computing device CD1.

During inference phase 304, trained machine learning model(s) 332 can receive input data 330 and generate and output one or more corresponding inferences and/or predictions 350 about input data 330. As such, input data 330 can be used as an input to trained machine learning model(s) 332 for providing corresponding inference(s) and/or prediction(s) 350. For example, trained machine learning model(s) 332 can generate inference(s) and/or prediction(s) 350 in response to one or more inference/prediction requests 340. In some examples, trained machine learning model(s) 332 can be executed by a portion of other software. For example, trained machine learning model(s) 332 can be executed by an inference or prediction daemon to be readily available to provide inferences and/or predictions upon request. Input data 330 can include data from computing device CD1 executing trained machine learning model(s) 332 and/or input data from one or more computing devices other than CD1.

An example image capturing device described herein may include one or more cameras and sensors, among other components. The image capturing device may be a smartphone, tablet, laptop, or digital camera, among other types of computing devices that may carry out the operations described herein.

As an example, a computing device may include one or more processors having logic for executing instructions, at least one built-in or peripheral image sensor (e.g., a camera), and an input/output device for displaying a user interface (e.g., a display panel). The computing device may further include a computer-readable medium (CRM). The CRM may include any suitable memory or storage device like random-access memory (RAM), static RAM (SRAM), dynamic RAM (DRAM), non-volatile RAM (NVRAM), read-only memory (ROM), or flash memory. The computing device stores device data (e.g., user data, multimedia data, applications, and/or an operating system of the device) on the CRM. The device data may include executable instructions for automatic zoom processes. The automatic zoom processes may be part of an operating system executing on the image capturing device, or may be a separate component executing within an application environment (e.g., a camera application) or a "framework" provided by the operating system.

The computing device may implement a machine-learned technique ("Visual Saliency Model"). The Visual Saliency Model may be implemented as one or more of a support vector machine (SVM), a recurrent neural network (RNN), a convolutional neural network (CNN), a dense neural network (DNN), one or more heuristics, other machine-learning techniques, a combination thereof, and so forth. The Visual Saliency Model may be iteratively trained, off-device, by exposure to training scenes, sequences, and/or events. For example, training may involve exposing the Visual Saliency Model to images (e.g., digital photographs), including user-drawn bounding boxes containing a visual saliency region (e.g., a region wherein one or more objects of particular interest to a user may reside). Exposure to images including user-drawn bounding boxes may facilitate training of the Visual Saliency Model to identify visual saliency regions within images. As a result of the training, the Visual Saliency Model can generate a visual saliency heatmap for a given image and produce a bounding box enclosing the region with the greatest probability of visual saliency. In this way, the Visual Saliency Model can predict visual saliency regions within images. After sufficient training, model compression using distillation can be implemented on the Visual Saliency Model enabling the selection of an optimal model architecture based on model latency and power consumption. The Visual Saliency Model can then be deployed to the CRM of the computing device as an independent module or implemented into the automatic zoom processes.

The computing device may carry out automatic zoom processes, perhaps automatically or in response to a received triggering signal, including, for example, a user performed gesture (e.g., tapping, pressing) enacted on the input/output device. The computing device may receive one or more captured images from the image sensor.

The computing device may utilize the Visual Saliency Model to generate a visual saliency heatmap using the one or more captured images.

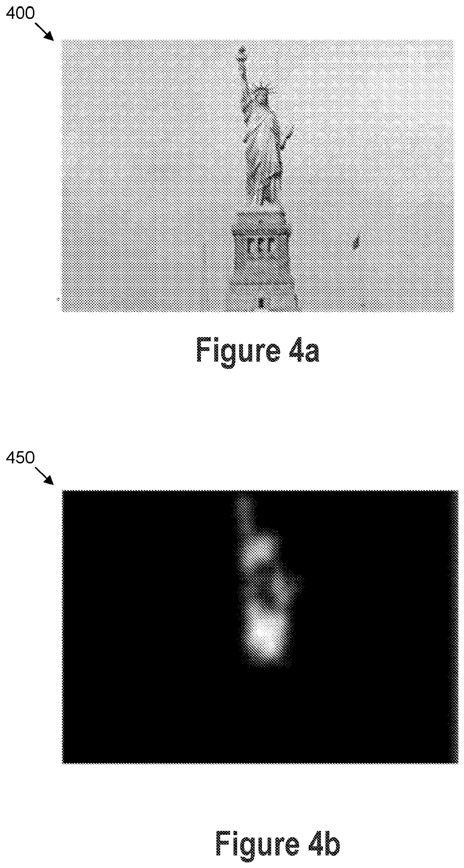

For example, Figure 4a is an image 400, in accordance with example embodiments. Figure 4b is a heatmap 450, in accordance with example embodiments. The computing device may utilize the Visual Saliency Model to generate a visual saliency heatmap of the captured image, as illustrated in Figures 4a and 4b. One or more processors calculate the visual saliency heatmap in the background operations of the device. In some examples, the image capturing device does not display the visual saliency heatmap to the user. As illustrated, the visual saliency heatmap depicts the magnitude of the visual saliency probability on a scale from black to white, where white indicates a high probability of saliency and black indicates a low probability of saliency.

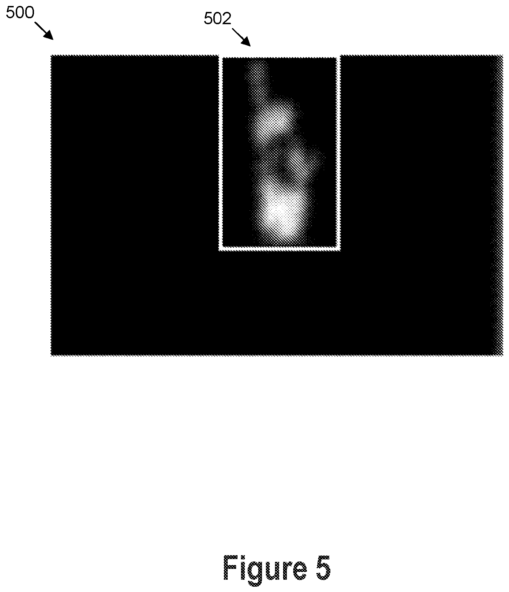

The Visual Saliency Model may produce a bounding box enclosing the region with the greatest probability of visual saliency. Figure 5 illustrates a heatmap 500 with a bounding box 502, in accordance with example embodiments.

As illustrated in Figure 5, the visual saliency heatmap includes a bounding box enclosing the region within the image containing the greatest probability of visual saliency. In the event that there are multiple objects of interest in a photographic scene, causing the Visual Saliency Model to identify multiple saliency regions within a captured image, the Visual Saliency Model can be trained to produce a bounding box enclosing the saliency region nearest the center of the captured image. This trained technique assumes that a user is interested in the most centralized object in the image. Alternatively, the Visual Saliency Model can be trained to produce a bounding box enclosing all the objects of interest in a captured image.

Using Equation 1, the computing device may calculate a targeted zoom ratio based on the bounding box dimensions:$zmRatio = max \left(boundingBoxWidth/imageWidth, boundingBoxHeight/imageHeight\right)$

Equation 1 enables the computing device to calculate a zoom ratio (zmRatio) based on the bounding box width (boundingBoxWidth) and the image width (imageWidth), as well as the bounding box height (boundingBoxHeight) and the image height (imageHeight). The computing device may utilize the zoom ratio value to adjust the zoom settings of the image capturing device.

Adjusting the zoom settings may involve the computing device directing one or more processors to adjust the arrangement of the optical lenses of an image sensor (i.e., optical zoom). In another aspect, the computing device utilizes a different image sensor to implement the calculated zoom ratio. In yet another aspect, the computing device digitally edits and enhances the image. For example, the computing device may crop and scale up the image, as well as add pixels (i.e., digital zoom). A combination of these aspects (e.g., hybrid zoom) may be utilized to achieve a suitable zoom, as well.

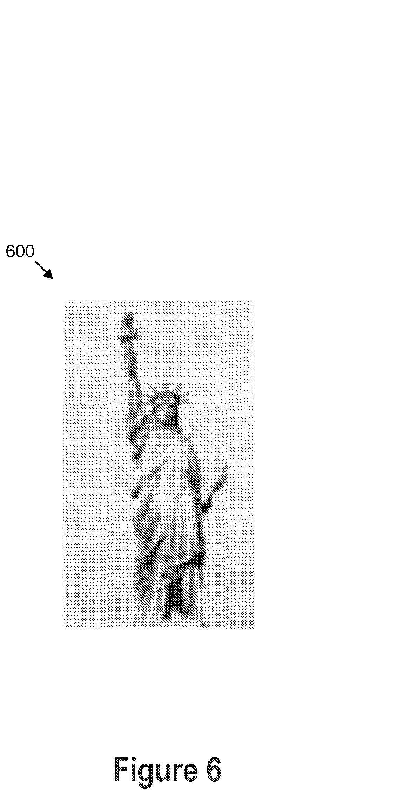

Figure 6 illustrates an image, in accordance with example embodiments. Image 600 may be a zoomed-in image of image 400 of Figure 4a based on bounding box 502 of Figure 5.

As illustrated in Figure 5, the Visual Saliency Model identified the object of interest within the image illustrated in Figure 4a, and the computing device implemented the calculated zoom ratio. Figure 6 illustrates an automatically zoomed-in image of image 400 of Figure 4a.

In an aspect, the Visual Saliency Model identifies visual saliency regions and creates bounding boxes only when the center of the visual saliency region is within a predetermined distance of the center of the image. When this condition is met, the computing device zooms in on the center of an image. In another aspect, the computing device enables the user to zoom into arbitrary regions, where the zoom center is the center of the saliency region, not the center of the image.

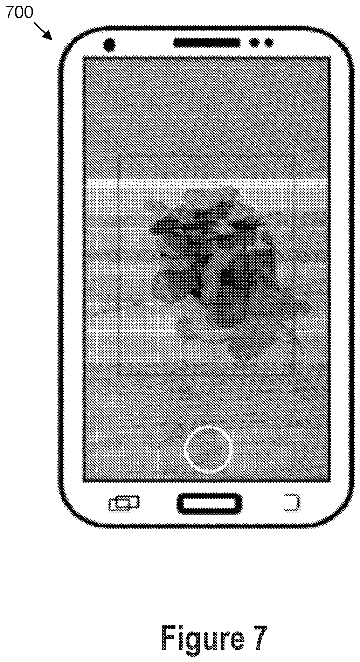

In addition to the above descriptions, when a computing device displays a captured image on the input/output device, the computing device may also display a bounding box enclosing the region within the image containing the greatest probability of visual saliency. In this way, the user can visualize the suggested automatic zoom before the computing device implements the zoom ratio. Figure 7 illustrates an image on a phone with a bounding box, in accordance with example embodiments.

As illustrated, in Figure 7, the image capturing device is a smartphone. The smartphone displays a captured image 700 to a user on the input/output device. Operating in the background of the device, the computing device utilizes the Visual Saliency Model to generate a visual saliency heatmap, identify the visual saliency region, and produce a bounding box enclosing the visual saliency region. As illustrated in Figure 7, the computing device presents the bounding box in the capture image enclosing the object of interest. The bounding box is presented to the user as a suggested automatic zoom.

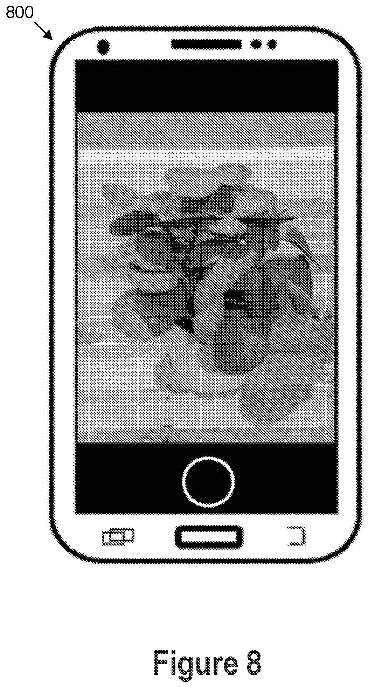

Responsive to a user gesture, for example, including selecting the bounding box or tapping the input-output device, the computing device implements the suggested automatic zoom. Figure 8 illustrates an image on a phone, in accordance with example embodiments. In particular, Figure 8 illustrates the smartphone and captured image of Figure 7 with the suggested automatic zoom implemented.

As illustrated in Figure 8, the smartphone displays a zoomed-in version 800 of the captured image from Figure 7. In this manner, the computing device, through the utilization of the visual saliency model, can detect a visual saliency region within an image, generate a bounding box enclosing the visual saliency region, calculate an appropriate zoom ratio, and implement the calculated zoom ratio to automatically achieve a suitable zoom for the photographic scene.

One issue that may arise during automatic zooming processes is determining that an area of the image is not as salient as other areas in the image and cropping out part of the image that includes an important element of the image. For example, for an image with a group of people, the computing device may determine that the person in the center of the image is the most salient area of the image and zoom to that area in the center of the image, which may not include the entire group of people in the image. Therefore, in some examples, the computing device may be configured to zoom into a specific area of an image frame based on the contents of the image frame. For example, the computing device may determine semantic classifications for one or more objects in an image frame. And based on the semantic classifications for objects in the image frame in addition to or as an alternative to the saliency heatmap, the computing device may determine an area to zoom.

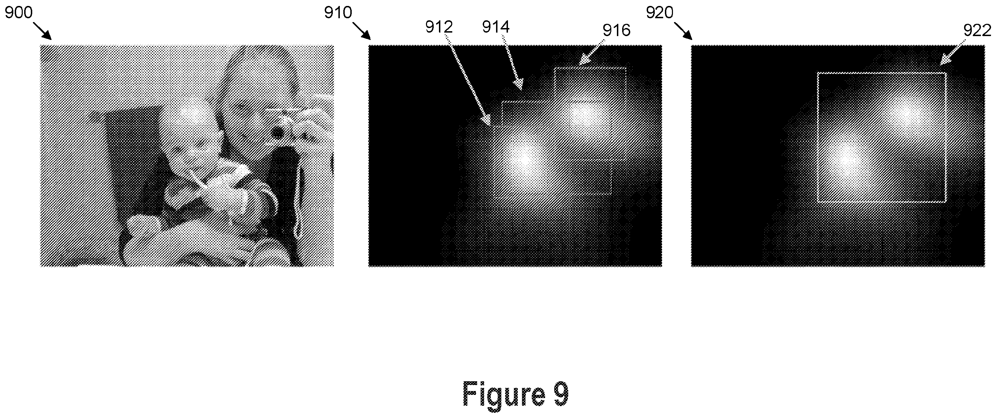

Figure 9 illustrates an image and heatmaps with bounding boxes, in accordance with example embodiments. Figure 9 includes image 900, from which saliency heat map 910 may be generated. Based on saliency heat map 910, the computing device may determine saliency bounding box 914 through executing the saliency bounding box determination process as described above. And based on applying a machine learning model to predict areas of the image with faces in image 900, the computing device may determine face bounding boxes 912 and 916.

After having determined one or more saliency bounding boxes and one or more face bounding boxes, the computing device may determine a zoom bounding box based on the determined saliency bounding boxes and the face bounding boxes. In particular, the computing system may determine a zoom bounding box by joining the saliency bounding box with each of the one or more face bounding boxes which overlaps the saliency bounding box, such that the zoom bounding box includes all the area within the saliency bounding box and all the area within each of the face bounding boxes which overlaps with the saliency bounding box. For example, based on saliency bounding box 914 and face bounding box 912 and 916, the computing device may determine zoom bounding box 922.

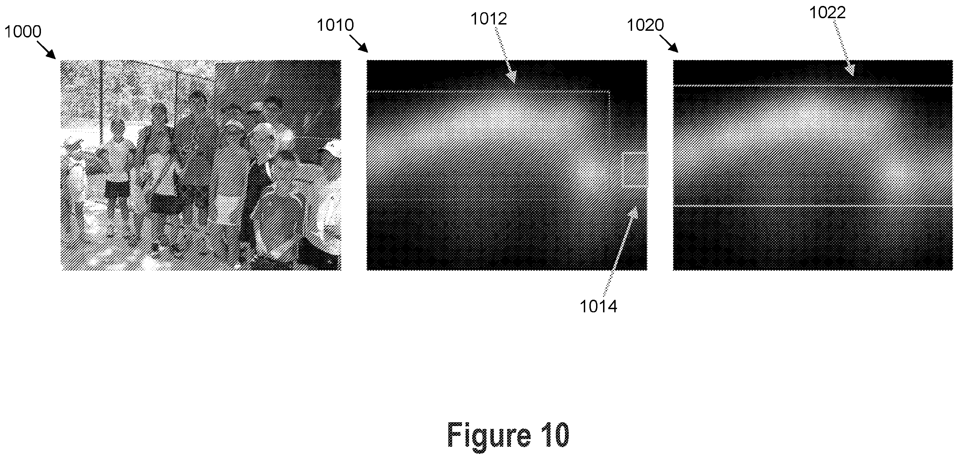

Figure 10 illustrates an image and heatmaps with bounding boxes, in accordance with example embodiments. In Figure 10, image 1000 is an image with one or more people, and the computing device may determine saliency heat map 1010 based on image 1000. Based on image 1000, the computing device may determine face bounding box 1014 and based on saliency heat map 1010, the computing device may determine saliency bounding box 1012. Although face bounding box 1014 is outside the area of saliency bounding box 1012 and no overlap exists between face bounding box 1014 and saliency bounding box 1012, the computing device may determine that the region within face bounding box 1014 should be included in the zoom bounding box, e.g., zoom bounding box 1022.

In some examples, for an image where a particular face bounding box is outside the saliency bounding box, the computing device may determine the average saliency for the saliency heat map region within the particular face bounding box, and the computing device may compare the determined average saliency with a threshold value. If the determined average saliency exceeds the threshold value, the computing device may expand the zoom bounding box to include the saliency bounding box. If the determined average saliency does not exceed the threshold value, the computing device may ignore the particular face bounding box when determining the zoom bounding box. For example, for image 1000, the computing device may determine that the average saliency for the heat map region within face bounding box 1014 exceeds the threshold value, and the computing device may determine zoom bounding box 1022, which includes face bounding box 1014. If the average saliency for the heat map region within the face bounding box 1014 does not exceed the threshold value, the computing device may determine the zoom bounding box includes the same area as saliency bounding box 1012 in saliency heat map 1010.

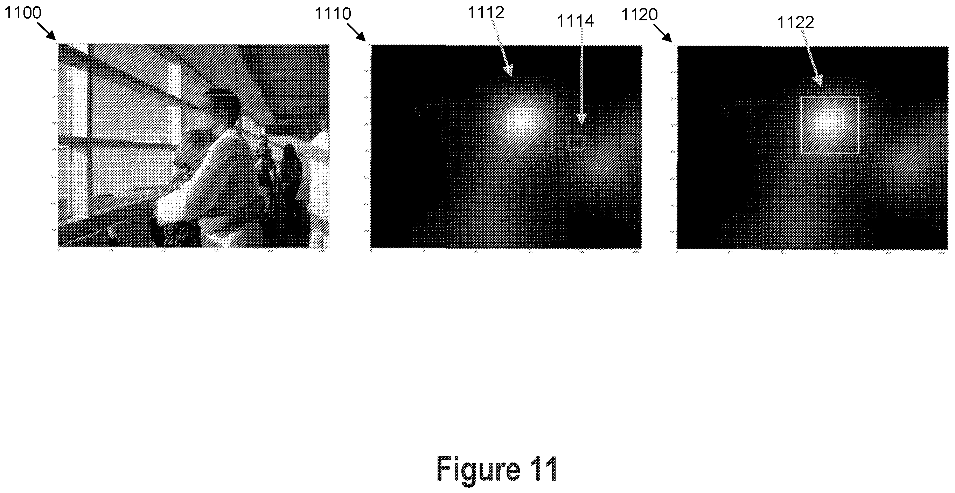

For example, Figure 11 illustrates an image and heatmaps with bounding boxes, in accordance with example embodiments. Based on image 1000, the computing device may determine at least face bounding box 1114 and heat map 1110. And based on heat map 1110, the computing device may determine saliency bounding box 1112, which may not overlap with face bounding box 1114. The computing device may calculate an average saliency for the area within face bounding box 1114 and determine that the average saliency does not exceed a threshold value. Based on that determination, the computing device may determine that zoom bounding box 1122 as only including the area within saliency bounding box 1112 and exclude the area within face bounding box 1114. In some examples, the computing device may determine additional face bounding boxes (e.g., a face bounding box at the location of saliency bounding box 1112), which would be included in zoom bounding box 1122, as such face bounding boxes would overlap with saliency bounding box 1112.

In further examples, the computing device may determine whether to include one or more face bounding boxes that do not overlap with the saliency bounding box, e.g., face bounding box 1114 which does not overlap with saliency bounding box 1112, in the zooming bounding box based on the respective size of each of the one or more face bounding boxes. For example, the percentage of pixels in face bounding box 1114 relative to the number of pixels in the entire image may be compared with a threshold pixel percentage. If the percentage of pixels in face bounding box 1114 exceeds the threshold pixel percentage, then the computing device may include face bounding box in the zoom bounding box. Otherwise, if the percentage of pixels in face bounding box 1114 does not exceed the threshold pixel percentage, then the computing device may exclude face bounding box in the zoom bounding box.

After having determined a zoom bounding box for a given image, the computing device may determine a zoom ratio based on Equation 1 as described above. With the determined zoom ratio, the computing device may provide a zoomed image for display, perhaps by adjusting the field of view of the computing device and/or cropping the image to include only the area of the given image included in the zoom bounding box.

In some examples, the computing device may apply a predetermined amount of padding to the zoom bounding box, and based on the zoom bounding box with the predetermined amount of padding, the computing device may determine the zoom ratio. The predetermined amount of padding may facilitate display of a zoomed image that is not excessively cropped (e.g., where the one or more subjects of the image are on the edge of the cropped image).

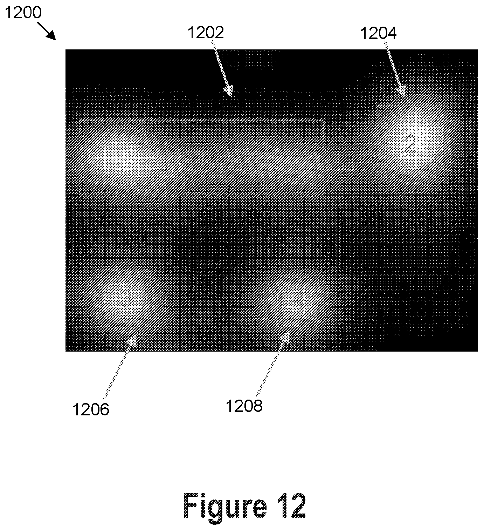

As mentioned above, to facilitate the process of determining zooming boxes, the computing device may first determine the saliency bounding box. Figure 12 illustrates a heatmap with bounding boxes, in accordance with example embodiments. Figure 12 includes candidate saliency bounding box 1202, candidate saliency bounding box 1204, candidate saliency bounding box 1206, and candidate saliency bounding box 1208 within heat map 1200.

Heat map 1200 may include one or more pixels, where each pixel is associated with a saliency metric. In heat map 1200, the more salient areas may be represented by lighter pixels and greater saliency metric. To determine the saliency bounding box, the computing device may first subtract a predetermined value from the saliency metric associated with each pixel to normalize the saliency map. The computing system may then determine an area (e.g., area encompassed by candidate saliency bounding box 1202) that maximizes an average saliency metric in the normalized heat map, perhaps by using a two-dimensional (2D) Kadane's algorithm or another iterative dynamic programming algorithm. In some examples, the computing system may also find additional candidate saliency boxes by undergoing a similar process for the rest of the heat map to identify candidate saliency bounding boxes 1204, 1206, and 1208. To determine which candidate saliency box to use when determining a zooming bounding box, the computing device may pick the candidate bounding box that may generate the most conservative (e.g., smallest) zooming ratio. In the case of heat map 1200, the computing device may determine to use candidate saliency bounding box 1202 in order to crop less of the image. And because the computing device may crop less of the image by using candidate saliency bounding box 1202, candidate saliency bounding box 1022 may be associated with the most conservative/smallest zooming ratio.

In some examples, the saliency bounding box and/or one or more of the face bounding boxes to be included in the zoom bounding box may be located very close to the edge of the image (e.g., image 1000 of Figure 10). Additionally and/or alternatively, the saliency bounding box and/or one or more of the face bounding boxes to be included in the zoom bounding box may be partially outside the edge of the image. If the computing device determines that one edge of the zoom bounding box is less than a threshold distance away from the edge of the image, and/or outside the padding of the image when the padding is applied to the inner edge of the image, the computing device may switch to using a different camera on the computing device, e.g., a camera with a wider field of view. And the computing system may then capture another image with the camera with the wider field of view and determine a new zoom bounding box that may include areas that were not captured with the previous camera. Additionally and/or alternatively, if the computing device determines that the zoom bounding box is more than a threshold distance away from the edge of the image, then the computing device may switch to a camera used for zooming (e.g., one with a smaller field of view that provides more clarity for objects farther away) and determine a new image and a new zoom bounding box for the image.

Further, in some examples, the computing system may only zoom into the center of the image. Therefore, the computing system may determine a zoom ratio based on the two edges (e.g., left or right, top or bottom) of the zoom bounding box that are closest to the edge of the image, such that extra area in the image may be included on the other two edges of the zoom bounding box that are farther away from the edge of the image.

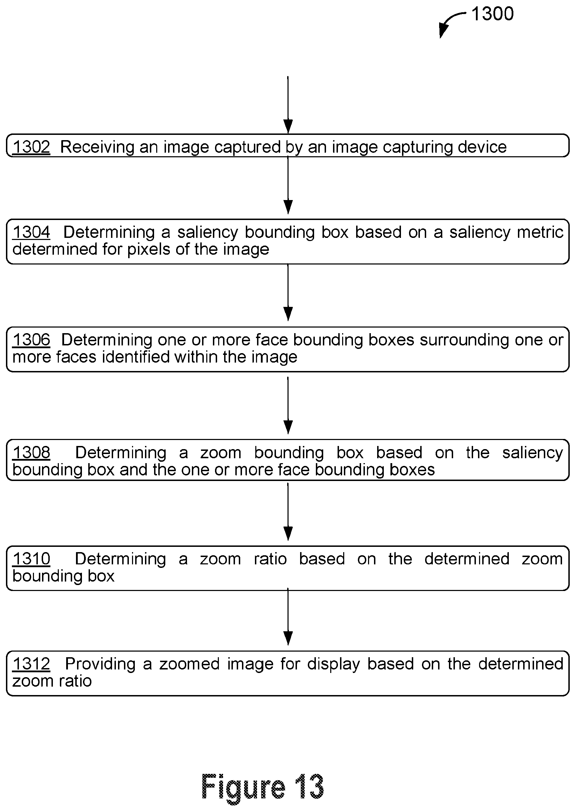

Figure 13 is a flow chart of method 1300, in accordance with example embodiments. Method 1300 may be executed by one or more computing systems (e.g., computing system 200 of Figure 2) and/or one or more processors (e.g., processor 206 of Figure 2). Method 1300 may be carried out on a computing device, such as computing device 100 of Figure 1.

At block 1302, method 1300 includes receiving an image captured by an image capturing device.

At block 1304, method 1300 includes determining a saliency bounding box based on a saliency metric determined for pixels of the image.

At block 1306, method 1300 includes determining one or more face bounding boxes surrounding one or more faces identified within the image.

At block 1308, method 1300 includes determining a zoom bounding box based on the saliency bounding box and the one or more face bounding boxes.

At block 1310, method 1300 includes determining a zoom ratio based on the determined zoom bounding box.

At block 1312, method 1300 includes providing a zoomed image for display based on the determined zoom ratio.

In some examples, determining the zoom bounding box based on the saliency bounding box and the one or more face bounding boxes comprises joining the saliency bounding box with each of the one or more face bounding boxes which overlaps the saliency bounding box.

In some examples, determining the zoom bounding box based on the saliency bounding box and the one or more face bounding boxes comprises determining whether to join the saliency bounding box with a given face bounding box of the one or more face bounding boxes based on the saliency metric determined for pixels of the given face bounding box.

In some examples, determining the zoom bounding box based on the saliency bounding box and the one or more face bounding boxes comprises determining the saliency bounding box to exclude a given face bounding box of the one or more face bounding boxes when the given face bounding box does not overlap the saliency bounding box and when the saliency metric determined for pixels of the given face bounding box is below a threshold.

In some examples, determining the zoom bounding box based on the saliency bounding box and the one or more face bounding boxes comprises determining whether to join each of the one or more face bounding boxes with the saliency bounding box based on a respective size of each of the one or more face bounding boxes.

In some examples, determining the saliency bounding box comprises applying a machine learned saliency model to determine the saliency metric for the pixels of the image.

In some examples, determining the one or more face bounding boxes comprises applying a machine learned face detection model to the image.

In some examples, the received image and the provided zoomed image are captured by different cameras on the image capturing device, wherein each of the different cameras has a different respective field of view.

In some examples, determining the saliency bounding box comprises applying an iterative dynamic programming algorithm.

In some examples, determining the saliency bounding box comprises determining a saliency heatmap for the pixels of the image, normalizing the saliency heatmap by reducing each value of the saliency heatmap by a predetermined amount, and locating a region within the normalized saliency heatmap which maximizes an average saliency value in the normalized saliency heatmap.

In some examples, determining the saliency bounding box comprises locating a plurality of regions within the normalized saliency heatmap which maximize an average saliency value in the normalized saliency heatmap and determining the saliency bounding box to be a region of the plurality of regions which will generate a most conservative zoom ratio.

In some examples, determining the zoom ratio comprises applying a predetermined amount of padding to the zoom bounding box.

In some examples, providing the zoomed image is performed responsive to a user input gesture received at the image capturing device.

In some examples, method 1300 is carried out by an image capturing device including a camera and a control system configured to perform the steps of method 1300.

In such examples, the camera may be a first camera, and the image capturing device comprises a second camera, where the zoomed image is captured by the second camera.

### III. Conclusion

The present disclosure is not to be limited in terms of the particular embodiments described in this application, which are intended as illustrations of various aspects. Many modifications and variations can be made without departing from the scope of the claims, as will be apparent to those skilled in the art. Functionally equivalent methods and apparatuses within the scope of the claims, in addition to those described herein, will be apparent to those skilled in the art from the foregoing descriptions. Such modifications and variations are intended to fall within the scope of the appended claims.

The above detailed description describes various features and operations of the disclosed systems, devices, and methods with reference to the accompanying figures. In the figures, similar symbols typically identify similar components, unless context dictates otherwise. The example embodiments described herein and in the figures are not meant to be limiting. Other embodiments can be utilized, and other changes can be made, without departing from the scope of the claims. It will be readily understood that the aspects of the present disclosure, as generally described herein, and illustrated in the figures, can be arranged, substituted, combined, separated, and designed in a wide variety of different configurations.

With respect to any or all of the message flow diagrams, scenarios, and flow charts in the figures and as discussed herein, each step, block, and/or communication can represent a processing of information and/or a transmission of information in accordance with example embodiments. Alternative embodiments are included within the scope of the claims. In these alternative embodiments, for example, operations described as steps, blocks, transmissions, communications, requests, responses, and/or messages can be executed out of order from that shown or discussed, including substantially concurrently or in reverse order, depending on the functionality involved. Further, more or fewer blocks and/or operations can be used with any of the message flow diagrams, scenarios, and flow charts discussed herein, and these message flow diagrams, scenarios, and flow charts can be combined with one another, in part or in whole.

A step or block that represents a processing of information may correspond to circuitry that can be configured to perform the specific logical functions of a herein-described method or technique. Alternatively or additionally, a block that represents a processing of information may correspond to a module, a segment, or a portion of program code (including related data). The program code may include one or more instructions executable by a processor for implementing specific logical operations or actions in the method or technique. The program code and/or related data may be stored on any type of computer readable medium such as a storage device including random access memory (RAM), a disk drive, a solid state drive, or another storage medium.

The computer readable medium may also include non-transitory computer readable media such as computer readable media that store data for short periods of time like register memory, processor cache, and RAM. The computer readable media may also include non-transitory computer readable media that store program code and/or data for longer periods of time. Thus, the computer readable media may include secondary or persistent long term storage, like read only memory (ROM), optical or magnetic disks, solid state drives, compact-disc read only memory (CD-ROM), for example. The computer readable media may also be any other volatile or non-volatile storage systems. A computer readable medium may be considered a computer readable storage medium, for example, or a tangible storage device.

Moreover, a step or block that represents one or more information transmissions may correspond to information transmissions between software and/or hardware modules in the same physical device. However, other information transmissions may be between software modules and/or hardware modules in different physical devices.

The particular arrangements shown in the figures should not be viewed as limiting. It should be understood that other embodiments can include more or less of each element shown in a given figure. Further, some of the illustrated elements can be combined or omitted. Yet further, an example embodiment can include elements that are not illustrated in the figures.

While various aspects and embodiments have been disclosed herein, other aspects and embodiments will be apparent to those skilled in the art. The various aspects and embodiments disclosed herein are for the purpose of illustration and are not intended to be limiting, with the true scope being indicated by the following claims.

## Claims

1. A method (1300) comprising:
receiving (1302) an image captured by an image capturing device;
determining (1304) a saliency bounding box based on a saliency metric determined for pixels of the image;
determining (1306) one or more face bounding boxes surrounding one or more faces identified within the image;
determining (1308) a zoom bounding box based on the saliency bounding box and the one or more face bounding boxes, **characterised in that** determining the zoom bounding box comprises:
for each of the one or more face bounding boxes that does not overlap the saliency bounding box, determining whether to join the non-overlapping face bounding box with the saliency bounding box based on at least one of:
(a) the saliency metric determined for pixels of the non-overlapping face bounding box being above a first threshold; or
(b) a size of the non-overlapping face bounding box being above a second threshold;
determining (1310) a zoom ratio based on the determined zoom bounding box; and
providing (1312) a zoomed image for display based on the determined zoom ratio.

2. The method of claim 1, wherein determining the zoom bounding box based on the saliency bounding box and the one or more face bounding boxes comprises joining the saliency bounding box with each of the one or more face bounding boxes which overlaps the saliency bounding box.

3. The method of claim 1, wherein determining the saliency bounding box comprises either:
applying a machine learned saliency model to determine the saliency metric for the pixels of the image; or
applying an iterative dynamic programming algorithm.

4. The method of claim 1, wherein determining the one or more face bounding boxes comprises applying a machine learned face detection model to the image.

5. The method of claim 1, wherein the image is captured by a first camera of the image capturing device, and wherein the method further comprises:
in response to determining that an edge of the zoom bounding box is less than a threshold distance away from an edge of the image, capturing an image with a second camera of the image capturing device, wherein the second camera has a wider field of view than the first camera.

6. The method of claim 1, wherein determining the saliency bounding box comprises:
determining a saliency heatmap for the pixels of the image;
normalizing the saliency heatmap by reducing each value of the saliency heatmap by a predetermined amount; and
locating a region within the normalized saliency heatmap which maximizes an average saliency value in the normalized saliency heatmap.

7. The method of claim 6, wherein determining the saliency bounding box comprises:
locating a plurality of regions within the normalized saliency heatmap which maximize an average saliency value in the normalized saliency heatmap; and
selecting a region from the plurality of regions, wherein the selected region will generate a smallest zoom ratio.

8. The method of claim 1, wherein determining the zoom ratio comprises applying a predetermined amount of padding to the zoom bounding box.

9. The method of claim 1, wherein providing the zoomed image is performed responsive to a user input gesture received at the image capturing device.

10. An image capturing device comprising:
a camera; and
a control system configured to:
receive an image captured by the camera;
determine a saliency bounding box based on a saliency metric determined for pixels of the image;
determine one or more face bounding boxes surrounding one or more faces identified within the image;
determine a zoom bounding box based on the saliency bounding box and the one or more face bounding boxes, **characterised in that** determining the zoom bounding box comprises:
for each of the one or more face bounding boxes that does not overlap the saliency bounding box, determining whether to join the non-overlapping face bounding box with the saliency bounding box based on at least one of:
(a) the saliency metric determined for pixels of the non-overlapping face bounding box being above a first threshold; or
(b) a size of the non-overlapping face bounding box being above a second threshold;
determine a zoom ratio based on the determined zoom bounding box; and
provide a zoomed image for display based on the determined zoom ratio.

11. The image capturing device of claim 10, wherein the camera is a first camera, wherein the image capturing device comprises a second camera having wider field of view than the first camera, and wherein the image capturing device is configured to capture an image using the second camera in response to determining that an edge of the zoom bounding box is less than a threshold distance away from an edge of the image captured by the first camera.

12. The image capturing device of claim 10, wherein the control system is configured to determine the zoom bounding box based on the saliency bounding box and the one or more face bounding boxes by joining the saliency bounding box with each of the one or more face bounding boxes which overlaps the saliency bounding box.

13. The image capturing device of claim 10, wherein the control system is configured to determine the zoom bounding box based on the saliency bounding box and the one or more face bounding boxes by determining whether to join each of the one or more face bounding boxes with the saliency bounding box based on a total number of the one or more face bounding boxes and based on a respective size of each of the one or more face bounding boxes.

14. A non-transitory computer readable medium storing program instructions executable by one or more processors to cause the one or more processors to perform the method of any one of claims 1 to 9.

15. A computer program product comprising instructions executable by one or more processors to cause the one or more processors to perform the method of any one of claims 1 to 9.

## Patentansprüche

1. Verfahren (1300), umfassend:
Empfangen (1302) eines durch eine Bildaufnahmevorrichtung aufgenommenen Bildes;
Bestimmen (1304) eines Bildeinmaligkeits-Begrenzungsrahmens basierend auf einer für Pixel des Bildes bestimmten Bildeinmaligkeitsmetrik;
Bestimmen (1306) eines oder mehrerer Gesichts-Begrenzungsrahmen, die ein oder mehrere innerhalb des Bildes identifizierte Gesichter umgeben;
Bestimmen (1308) eines Zoom-Begrenzungsrahmens basierend auf dem Bildeinmaligkeits-Begrenzungsrahmen und dem einen oder den mehreren Gesichts-Begrenzungsrahmen, **dadurch gekennzeichnet, dass** Bestimmen des Zoom-Begrenzungsrahmens Folgendes umfasst:
für jeden des einen oder der mehreren Gesichts-Begrenzungsrahmen, der nicht mit dem Bildeinmaligkeits-Begrenzungsrahmen überlappt, Bestimmen, ob der nicht überlappende Gesichts-Begrenzungsrahmen mit dem Bildeinmaligkeits-Begrenzungsrahmen zusammengefügt werden soll, basierend auf mindestens einem von:
(a) dass die für Pixel des nicht überlappenden Gesichts-Begrenzungsrahmens bestimmte Bildeinmaligkeitsmetrik über einem ersten Schwellenwert liegt; oder
(b) dass eine Größe des nicht überlappenden Gesichts-Begrenzungsrahmens über einem zweiten Schwellenwert liegt;
Bestimmen (1310) eines Zoom-Verhältnisses basierend auf dem bestimmten Zoom-Begrenzungsrahmen; und
Bereitstellen (1312) eines gezoomten Bildes zur Anzeige basierend auf dem bestimmten Zoom-Verhältnis.

2. Verfahren nach Anspruch 1, wobei Bestimmen des Zoom-Begrenzungsrahmens basierend auf dem Bildeinmaligkeits-Begrenzungsrahmen und dem einen oder den mehreren Gesichts-Begrenzungsrahmen Zusammenfügen des Bildeinmaligkeits-Begrenzungsrahmens mit jedem des einen oder der mehreren Gesichts-Begrenzungsrahmen umfasst, der mit dem Bildeinmaligkeits-Begrenzungsrahmen überlappt.

3. Verfahren nach Anspruch 1, wobei Bestimmen des Bildeinmaligkeits-Begrenzungsrahmens eines der Folgenden umfasst:
Anwenden eines maschinell gelernten Bildeinmaligkeitsmodells, um die Bildeinmaligkeitsmetrik für die Pixel des Bildes zu bestimmen; oder
Anwenden eines iterativen Algorithmus zur dynamischen Programmierung.

4. Verfahren nach Anspruch 1, wobei Bestimmen des einen oder der mehreren Gesichts-Begrenzungsrahmen Anwenden eines maschinell gelernten Gesichtserkennungsmodells auf das Bild umfasst.

5. Verfahren nach Anspruch 1, wobei das Bild durch eine erste Kamera der Bildaufnahmevorrichtung aufgenommen wird, und wobei das Verfahren ferner Folgendes umfasst:
als Reaktion auf das Bestimmen, dass ein Rand des Zoom-Begrenzungsrahmens weniger als eine Schwellenwert-Entfernung von einem Rand des Bildes entfernt ist, Aufnehmen eines Bildes mit einer zweiten Kamera der Bildaufnahmevorrichtung, wobei die zweite Kamera ein breiteres Sichtfeld als die erste Kamera aufweist.

6. Verfahren nach Anspruch 1, wobei Bestimmen des Bildeinmaligkeits-Begrenzungsrahmens Folgendes umfasst:
Bestimmen einer Bildeinmaligkeits-Heatmap für die Pixel des Bildes;
Normalisieren der Bildeinmaligkeits-Heatmap durch Reduzieren jedes Wertes der Bildeinmaligkeits-Heatmap um einen vorbestimmten Betrag; und
Lokalisieren einer Region innerhalb der normalisierten Bildeinmaligkeits-Heatmap, die einen durchschnittlichen Bildeinmaligkeitswert in der normalisierten Bildeinmaligkeits-Heatmap maximiert.

7. Verfahren nach Anspruch 6, wobei Bestimmen des Bildeinmaligkeits-Begrenzungsrahmens Folgendes umfasst:
Lokalisieren einer Mehrzahl von Regionen innerhalb der normalisierten Bildeinmaligkeits-Heatmap, die einen durchschnittlichen Bildeinmaligkeitswert in der normalisierten Bildeinmaligkeits-Heatmap maximieren; und
Auswählen einer Region aus der Mehrzahl von Regionen, wobei die ausgewählte Region ein kleinstes Zoom-Verhältnis erzeugen wird.

8. Verfahren nach Anspruch 1, wobei Bestimmen des Zoom-Verhältnisses Anwenden eines vorbestimmten Betrags an Auffüllung auf den Zoom-Begrenzungsrahmen umfasst.

9. Verfahren nach Anspruch 1, wobei Bereitstellen des gezoomten Bildes als Reaktion auf eine an der Bildaufnahmevorrichtung empfangene Benutzereingabegeste durchgeführt wird.

10. Bildaufnahmevorrichtung, umfassend:
eine Kamera; und
ein Steuersystem, das zu Folgendem konfiguriert ist:
Empfangen eines durch die Kamera aufgenommenen Bildes;
Bestimmen eines Bildeinmaligkeits-Begrenzungsrahmens basierend auf einer für Pixel des Bildes bestimmten Bildeinmaligkeitsmetrik;
Bestimmen eines oder mehrerer Gesichts-Begrenzungsrahmen, die ein oder mehrere innerhalb des Bildes identifizierte Gesichter umgeben;
Bestimmen eines Zoom-Begrenzungsrahmens basierend auf dem Bildeinmaligkeits-Begrenzungsrahmen und dem einen oder den mehreren Gesichts-Begrenzungsrahmen, **dadurch gekennzeichnet, dass** Bestimmen des Zoom-Begrenzungsrahmens Folgendes umfasst:
für jeden des einen oder der mehreren Gesichts-Begrenzungsrahmen, der nicht mit dem Bildeinmaligkeits-Begrenzungsrahmen überlappt, Bestimmen, ob der nicht überlappende Gesichts-Begrenzungsrahmen mit dem Bildeinmaligkeits-Begrenzungsrahmen zusammengefügt werden soll, basierend auf mindestens einem von:
(a) dass die für Pixel des nicht überlappenden Gesichts-Begrenzungsrahmens bestimmte Bildeinmaligkeitsmetrik über einem ersten Schwellenwert liegt; oder
(b) dass eine Größe des nicht überlappenden Gesichts-Begrenzungsrahmens über einem zweiten Schwellenwert liegt;
Bestimmen eines Zoom-Verhältnisses basierend auf dem bestimmten Zoom-Begrenzungsrahmen; und
Bereitstellen eines gezoomten Bildes zur Anzeige basierend auf dem bestimmten Zoom-Verhältnis.

11. Bildaufnahmevorrichtung nach Anspruch 10, wobei die Kamera eine erste Kamera ist, wobei die Bildaufnahmevorrichtung eine zweite Kamera umfasst, die ein breiteres Sichtfeld als die erste Kamera aufweist, und wobei die Bildaufnahmevorrichtung konfiguriert ist, ein Bild unter Verwendung der zweiten Kamera als Reaktion auf das Bestimmen aufzunehmen, dass ein Rand des Zoom-Begrenzungsrahmens weniger als eine Schwellenwert-Entfernung von einem Rand des durch die erste Kamera aufgenommenen Bildes entfernt ist.

12. Bildaufnahmevorrichtung nach Anspruch 10, wobei das Steuersystem konfiguriert ist, den Zoom-Begrenzungsrahmen basierend auf dem Bildeinmaligkeits-Begrenzungsrahmen und dem einen oder den mehreren Gesichts-Begrenzungsrahmen durch Zusammenfügen des Bildeinmaligkeits-Begrenzungsrahmens mit jedem des einen oder der mehreren Gesichts-Begrenzungsrahmen zu bestimmen, der mit dem Bildeinmaligkeits-Begrenzungsrahmen überlappt.

13. Bildaufnahmevorrichtung nach Anspruch 10, wobei das Steuersystem konfiguriert ist, den Zoom-Begrenzungsrahmen basierend auf dem Bildeinmaligkeits-Begrenzungsrahmen und dem einen oder den mehreren Gesichts-Begrenzungsrahmen durch Bestimmen zu bestimmen, ob jeder des einen oder der mehreren Gesichts-Begrenzungsrahmen mit dem Bildeinmaligkeits-Begrenzungsrahmen zusammengefügt werden soll, basierend auf einer Gesamtzahl des einen oder der mehreren Gesichts-Begrenzungsrahmen und basierend auf einer jeweiligen Größe jedes des einen oder der mehreren Gesichts-Begrenzungsrahmen.

14. Nichtflüchtiges computerlesbares Medium, das Programmanweisungen speichert, die von einem oder mehreren Prozessoren ausführbar sind, um den einen oder die mehreren Prozessoren zu veranlassen, das Verfahren nach einem der Ansprüche 1 bis 9 durchzuführen.

15. Computerprogrammprodukt, umfassend Anweisungen, die von einem oder mehreren Prozessoren ausführbar sind, um den einen oder die mehreren Prozessoren zu veranlassen, das Verfahren nach einem der Ansprüche 1 bis 9 durchzuführen.

## Revendications

1. Procédé (1300) comprenant :
la réception (1302) d'une image capturée par un dispositif de capture d'images ;
la détermination (1304) d'une boîte englobante de saillance sur la base d'une métrique de saillance déterminée pour les pixels de l'image ;
la détermination (1306) d'une ou plusieurs boîtes englobantes de visage entourant un ou plusieurs visages identifiés dans l'image ;
la détermination (1308) d'une boîte englobante de zoom sur la base de la boîte englobante de saillance et des une ou plusieurs boîtes englobantes de visage, **caractérisé en ce que** la détermination de la boîte englobante de zoom comprend :
pour chacune des une ou plusieurs boîtes englobantes de visage ne chevauchant pas la boîte englobante de saillance, le fait de déterminer s'il faut joindre la boîte englobante de visage non chevauchante à la boîte englobante de saillance sur la base au moins de l'un des critères suivants :
(a) la mesure de saillance déterminée pour les pixels de la boîte englobante de visage non chevauchante se situe au-dessus d'un premier seuil ; ou
(b) une taille de la boîte englobante de visage non chevauchante se situe au-dessus d'un second seuil ;
la détermination (1310) d'un rapport de zoom sur la base de la boîte englobante de zoom déterminée ; et
la fourniture (1312) d'une image zoomée pour affichage sur la base du rapport de zoom déterminé.

2. Procédé selon la revendication 1, dans lequel la détermination de la boîte englobante de zoom sur la base de la boîte englobante de saillance et des une ou plusieurs boîtes englobantes de visage comprend la jonction de la boîte englobante de saillance avec chacune des une ou plusieurs boîtes englobantes de visage qui chevauchent la boîte englobante de saillance.

3. Procédé selon la revendication 1, dans lequel la détermination de la boîte englobante de saillance comprend soit :
l'application d'un modèle de saillance entraîné par apprentissage automatique pour déterminer la mesure de saillance des pixels de l'image ; soit
l'application d'un algorithme de programmation dynamique itératif.

4. Procédé selon la revendication 1, dans lequel la détermination des une ou plusieurs boîtes englobantes de visage comprend l'application d'un modèle de détection de visage entraîné par apprentissage automatique à l'image.

5. Procédé selon la revendication 1, dans lequel l'image est capturée par une première caméra du dispositif de capture d'images, et dans lequel le procédé comprend en outre :
en réponse à la détermination qu'un bord de la boîte englobante de zoom est à une distance inférieure à un seuil d'un bord de l'image, la capture d'une image avec une seconde caméra du dispositif de capture d'images, dans lequel la seconde caméra a un champ de vision plus large que la première caméra.

6. Procédé selon la revendication 1, dans lequel la détermination de la boîte englobante de saillance comprend :
la détermination d'une carte thermique de saillance pour les pixels de l'image ;
la normalisation de la carte thermique de saillance par réduction de chaque valeur de la carte thermique de saillance d'une quantité prédéterminée ; et
la localisation d'une région dans la carte thermique de saillance normalisée qui maximise une valeur de saillance moyenne dans la carte thermique de saillance normalisée.

7. Procédé selon la revendication 6, dans lequel la détermination de la boîte englobante de saillance comprend :
la localisation d'une pluralité de régions dans la carte thermique de saillance normalisée qui maximisent une valeur de saillance moyenne dans la carte thermique de saillance normalisée ; et
la sélection d'une région parmi la pluralité de régions, dans lequel la région sélectionnée générera le rapport de zoom le plus faible.

8. Procédé selon la revendication 1, dans lequel la détermination du rapport de zoom comprend l'application d'une quantité prédéterminée de remplissage à la boîte englobante de zoom.

9. Procédé selon la revendication 1, dans lequel la fourniture de l'image zoomée est effectuée en réponse à un geste d'entrée utilisateur reçu au niveau du dispositif de capture d'images.

10. Dispositif de capture d'images comprenant :
une caméra ; et
un système de commande configuré pour :
recevoir une image capturée par la caméra ;
déterminer une boîte englobante de saillance sur la base d'une métrique de saillance déterminée pour les pixels de l'image ;
déterminer une ou plusieurs boîtes englobantes de visage entourant un ou plusieurs visages identifiés dans l'image ;
déterminer une boîte englobante de zoom sur la base de la boîte englobante de saillance et des une ou plusieurs boîtes englobantes de visage, **caractérisé en ce que** la détermination de la boîte englobante de zoom comprend :
pour chacune des une ou plusieurs boîtes englobantes de visage ne chevauchant pas la boîte englobante de saillance, le fait de déterminer s'il faut joindre la boîte englobante de visage non chevauchante à la boîte englobante de saillance sur la base au moins de l'un des critères suivants :
(a) la mesure de saillance déterminée pour les pixels de la boîte englobante de visage non chevauchante se situe au-dessus d'un premier seuil ; ou
(b) une taille de la boîte englobante de visage non chevauchante se situe au-dessus d'un second seuil ;
déterminer un rapport de zoom sur la base de la boîte englobante de zoom déterminée ; et
fournir une image zoomée pour affichage sur la base du rapport de zoom déterminé.

11. Dispositif de capture d'images selon la revendication 10, dans lequel la caméra est une première caméra, dans lequel le dispositif de capture d'images comprend une seconde caméra ayant un champ de vision plus large que la première caméra, et dans lequel le dispositif de capture d'images est configuré pour capturer une image à l'aide de la seconde caméra en réponse à la détermination qu'un bord de la boîte englobante de zoom est à une distance inférieure à un seuil d'un bord de l'image capturée par la première caméra.

12. Dispositif de capture d'images selon la revendication 10, dans lequel le système de commande est configuré pour déterminer la boîte englobante de zoom sur la base de la boîte englobante de saillance et des une ou plusieurs boîtes englobantes de visage en joignant la boîte englobante de saillance à chacune des une ou plusieurs boîtes englobantes de visage qui chevauchent la boîte englobante de saillance.

13. Dispositif de capture d'images selon la revendication 10, dans lequel le système de commande est configuré pour déterminer la boîte englobante de zoom sur la base de la boîte englobante de saillance et des une ou plusieurs boîtes englobantes de visage en déterminant s'il faut joindre chacune des une ou plusieurs boîtes englobantes de visage à la boîte englobante de saillance sur la base du nombre total des une ou plusieurs boîtes englobantes de visage et sur la base de la taille respective de chacune des une ou plusieurs boîtes englobantes de visage.

14. Support non transitoire lisible par ordinateur stockant des instructions de programme exécutables par un ou plusieurs processeurs afin d'amener les un ou plusieurs processeurs à réaliser le procédé selon l'une quelconque des revendications 1 à 9.

15. Produit de programme informatique comprenant des instructions exécutables par un ou plusieurs processeurs afin d'amener les un ou plusieurs processeurs à réaliser le procédé selon l'une quelconque des revendications 1 à 9.
